# EUROPEAN PATENT SPECIFICATION

(11) **EP 2 631 122 B1**
(45) Date of publication and mention of the grant of the patent: **11.11.2020**
(21) Application number: 13154173.2
(22) Date of filing: 06.02.2013
(51) Int. Cl.: B60Q 1/18, B60Q 1/08, F21S 41/692

(54) **HEADLAMP CONTROL SYSTEM**
STEUERSYSTEM FÜR SCHEINWERFER
SYSTÈME DE COMMANDE DE PHARE

(30) Priority: 24.02.2012 JP 2012038852; 21.09.2012 JP 2012208190
(43) Date of publication of application: 28.08.2013
(73) Proprietor: Koito Manufacturing Co., Ltd., Tokyo 108-8711 (JP)
(72) Inventor: Mochizuki, Mitsuyuki, Shizuoka (JP)
(74) Representative: Hoffmann Eitle

(56) References cited:
- EP-A1- 2 233 356
- EP-A2- 2 085 688
- GB-A- 2 395 390
- KASAI Y ET AL: "Study on spot lamps for early detection of pedestrians and obstacles", V.I.S.I.O.N : VEHICLE AND INFRASTRUCTURE SAFETY IMPROVEMENT IN ADVERSE CONDITIONS AND NIGHT DRIVING ; OCTOBER 6 - 7, 2010, VERSAILLES, SATORY, FRANCE ; PROCEEDINGS ; INTERNATIONAL CONFERENCE AND EXHIBITION /, SIA, SOCIÉTÉ DES INGÉNIEURS DE L'AUTOMOBI, 6 October 2010 (2010-10-06), pages 1-7, XP008149702,

## Description

### BACKGROUND

### 1. Technical Field

The invention relates to a headlamp control system for controlling the headlamp apparatus in accordance with the preamble of claim 1, such as, for example, disclosed in EP 2 085 688 A2.

### 2. Related Art

There has been known a headlamp apparatus (so-called marking light) that is mounted in a vehicle as a lamp being separately from a low-beam lamp and a high-beam lamp for illuminating ahead of the vehicle and that emit illumination light in a spotlight fashion to a pedestrian or the like who is detected to be ahead of the vehicle (see, for example, JP 2010-036835 A).

### SUMMARY

The reasons why the spotlight illumination is performed are that the spotlight illumination enables a driver to surely visually recognize a pedestrian or the like who exists ahead of the vehicle when the vehicle runs at night or the like and that danger can be avoided by letting the detected pedestrian or the like recognize the existence of the vehicle. However, strong glare is caused to the pedestrian to whom light is emitted in the spotlight manner.

The invention provides a technology that reliably lets a detected pedestrian or the like recognize existence of a vehicle without causing glare, by spotlight illumination, to the pedestrian or the like.

The present invention features a headlamp control system with the features of claim 1.

With the above configuration, since the head of the person is included in the non-illumination region, it is possible to suppress the glare which is caused to the person. That is, the spotlight illumination enables a driver to reliably visually recognize the detected person, and to reliably let the person recognize the existence of the vehicle while suppressing the glare which is caused to the person.

Also, the light source may include a plurality of light emitting elements arranged in an upper and lower direction. The control section may turn off at least one of the plurality of light emitting elements tο form the non-illumination region.

Also, the lamp unit may further include a shade and a second driving mechanism. The shade may be configured to block a part of the light emitted from the light source. The second driving mechanism may be configured to move the shade in the upper and lower direction. The control section may control the second driving mechanism to form the non-illumination region by the shade.

In this case, only the single light emitting element is used to control whether or not the non-illumination region is formed by the movement of the shade. Therefore, a process of determining the height of the head of the person or a control of turning on or off the plurality of light emitting elements is not required. Accordingly, the circuit configuration of the light source can be simplified, and a processing load on the control section can be reduced.

Also, the illumination region may be formed to include at least a portion below a horizontal line. In this case, the illumination light forms a streak of the light on a road surface. The person can visually recognizes the streak of the light extending from the vehicle to himself or herself, thereby further reliably let the person recognize the existence of the vehicle.

Also, the first driving mechanism may pivot the lens in the right and left direction to move the illumination region in the right and left direction. In this case, as compared to the configuration in which the whole lamp unit is swiveled in the right and left direction, an object to be controlled is light in weight. Therefore, it is possible to quickly follow the movement of a detected object, and miniaturize and simplify the driving mechanism.

Also, according to the invention, there are provided at least two lamp units. The at least two lamp units are respectively disposed in left and right front portions of the vehicle. The lamp unit disposed in the left front portions of the vehicle and the lamp unit disposed in the right front portion of the vehicle are configured such that the heights of the lower ends of the respective non-illumination regions are different from each other.

With the configuration, in the case where the non-illumination regions are formed by moving the shades or turning off the predetermined light emitting elements (that is, a range of the non-illumination regions is not changed), two types of heights are achieved for the lower ends of the non-illumination regions, which can be selectively used depending upon a situation.

Also, the control section may form the non-illumination region using any one of the lamp units disposed in the left and right front portions of the vehicle in accordance with a distance between the vehicle and the person detected by the detection section.

Specifically, if the person detected near the vehicle is illuminated by the lamp unit which is set so that the lower end of the non-illumination region is at a higher position, an area of the illumination region on the person can be increased, thereby enabling the driver to have the good visibility. If the person detected at a distant position is illuminated by the lamp unit which is set so that the lower end of the non-illumination region is at a lower position, the reliable glare suppression effect can be achieved.

### BRIEF DESCRIPTION OF THE DRAWINGS

Fig. 1 is a schematic diagram illustrating the whole configuration of a vehicle equipped with a headlamp apparatus according to a first example which is not part of the invention.
Fig. 2 is a perspective view illustrating an appearance of a marking light unit of the headlamp apparatus shown in Fig. 1.
Fig. 3 is an enlarged perspective view illustrating an appearance of a light source unit of the marking light unit shown in Fig. 2.
Figs. 4A and 4B are diagrams explaining light distribution caused by the marking light unit shown in Fig. 2.
Fig. 5 is a perspective view illustrating an appearance of a marking light unit of a headlamp apparatus according to a second example which is not part of the invention.
Figs. 6A and 6B are an enlarged perspective views illustrating an appearance of a light source unit of the marking light unit shown in Fig. 5.
Figs. 7A and 7B are diagrams explaining light distribution caused by the marking light unit shown in Fig. 5.
Fig. 8 is a diagram explaining light distribution caused by a marking light unit of a headlamp apparatus according to an embodiment of the invention.
Fig. 9 is a diagram explaining another example of light distribution caused by the marking light unit shown in Fig. 2.
Figs. 10A and 10B are diagrams explaining further another example of light distribution caused by the marking light unit shown in Fig. 2.

### DETAILED DESCRIPTION

Hereinafter, the invention will be explained in detail with reference to the accompanying drawings. In each of the drawings which are referred to in the following description, the scale of each element is changed appropriately in order to make each element recognizable.

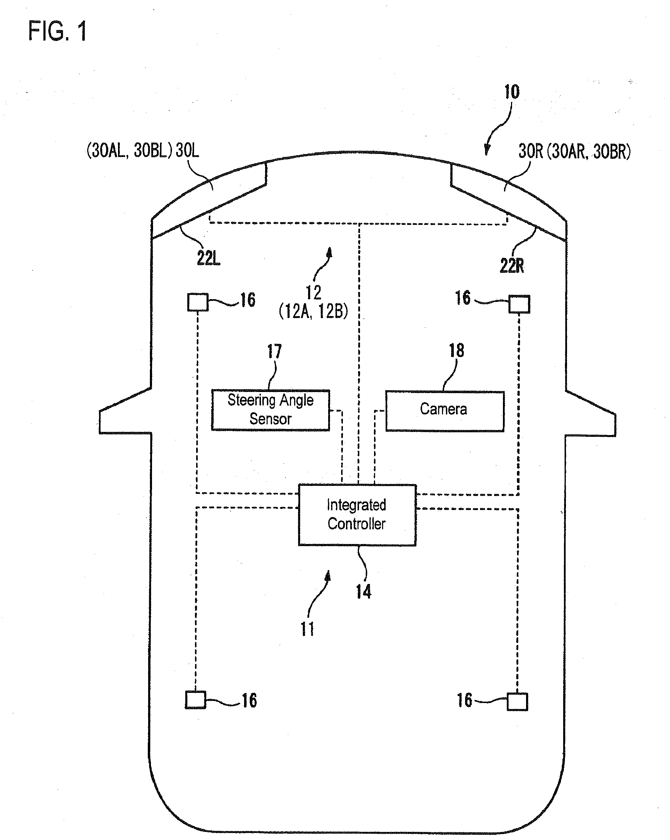

Fig. 1 is a schematic diagram illustrating the whole configuration of a vehicle 10 equipped with a headlamp apparatus 12 according to a first example. The headlamp apparatus 12, an integrated controller 14, wheel speed sensors 16, a steering angle sensor 17, and a camera 18 constitute a headlamp control system.

The integrated controller 14 includes a CPU for executing various operation processing, a ROM for storing various control programs therein, and a RAM used as a work area for data storage or program execution. The integrated controller 14 executes various controls in the vehicle 10.

The wheel speed sensors 16 are provided so as to correspond to four wheels, that is, left and right front wheels and left and right rear wheels which are assembled to the vehicle 10. Each of the wheel speed sensors 16 is communicably connected to the integrated controller 14, and outputs to the integrated controller 14 a signal corresponding to a rotation speed of the wheel. The integrated controller 14 calculates the velocity of the vehicle using the signals input from the wheel speed sensors 16.

The steering angle sensor 17 is provided in a steering wheel and is communicably connected to the integrated controller 14. The steering angle sensor 17 outputs a steering angle pulse signal corresponding to a steering rotation angle of the steering wheel, caused by a driver, to the integrated controller 14. The integrated controller 14 calculates a traveling direction of the vehicle 10 using the signal input from the steering angle sensor 17.

The camera 18 includes an imaging element such as a CCD (Charged Coupled Device) sensor or a CMOS (Complementary Metal Oxide Semiconductor) sensor, and captures ahead of the vehicle to generate image data. The camera 18 is communicably connected to the integrated controller 14. The generated image data is output from the camera 18 to the integrated controller 14.

The headlamp apparatus 12 includes a right headlamp unit 22R disposed near a right side of a front portion of the vehicle 10 and a left headlamp unit 22L disposed near a left side of the front portion of the vehicle 10. The right headlamp unit 22r and the left headlamp unit 22L have a right marking light unit 30R and a left marking light unit 30L (which are examples of a lamp unit), respectively.

Hereinafter, if necessary, the right headlamp unit 22R and the left headlamp unit 22L may be collectively referred to as a "headlamp unit 22", and the right marking light unit 30R and the left marking light unit 30L may be collectively referred to as a "marking light unit 30."

The marking light unit 30 is a lamp unit that, when the integrated controller 14 detects a pedestrian or the like ahead of the vehicle 10 based on the image captured by the camera 18, emits light to the pedestrian or the like in a spotlight fashion. In this example, the marking light unit 30 is mounted in the vehicle 10 as an independent lamp unit from a low-beam illumination lamp unit and a high-beam illumination lamp unit for illuminating ahead of the vehicle 10.

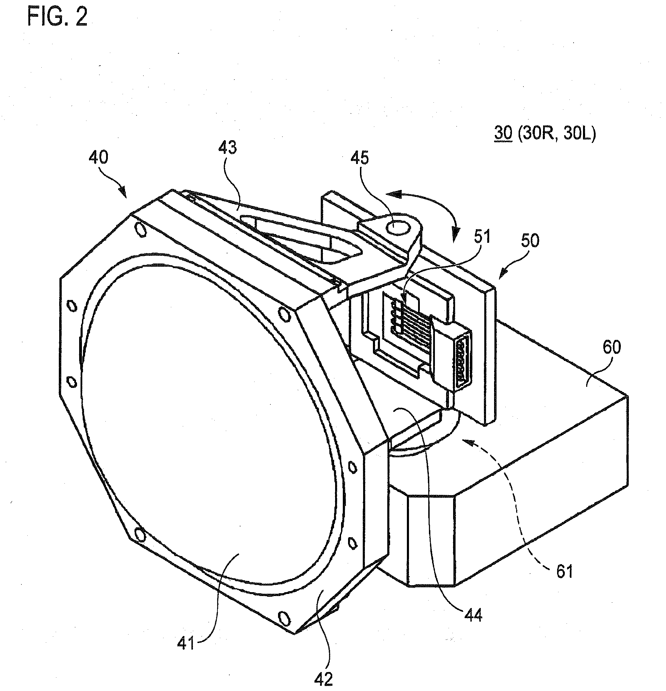

Fig. 2 is a perspective view illustrating an appearance of the marking light unit 30. The marking light unit 30 includes a lens unit 40, a light source unit 50, and an actuator unit 60.

In the lens unit 40, a lens holder 42 supports an outer edge portion of a projection lens 41. An upper support arm 43 and a lower support arm 44 extend rearward respectively from an upper end portion and a lower end portion of the lens holder 42. The light source unit 50 is fixed between a rear end portion of the upper support arm 43 and a rear end portion of the lower support arm 44. The upper support arm 43 and the lower support arm 44 are connected to each other by a rotation shaft 45.

The rotation shaft 45 is connected to a rotation shaft of a motor 61 built-in the actuator unit 60. With this configuration, the lens unit 40 and the light source unit 50 are supported on the actuator unit 60 so as to be rotatable in left and right directions which are indicated by arrows. The motor 61 is communicably connected to the integrated controller 14.

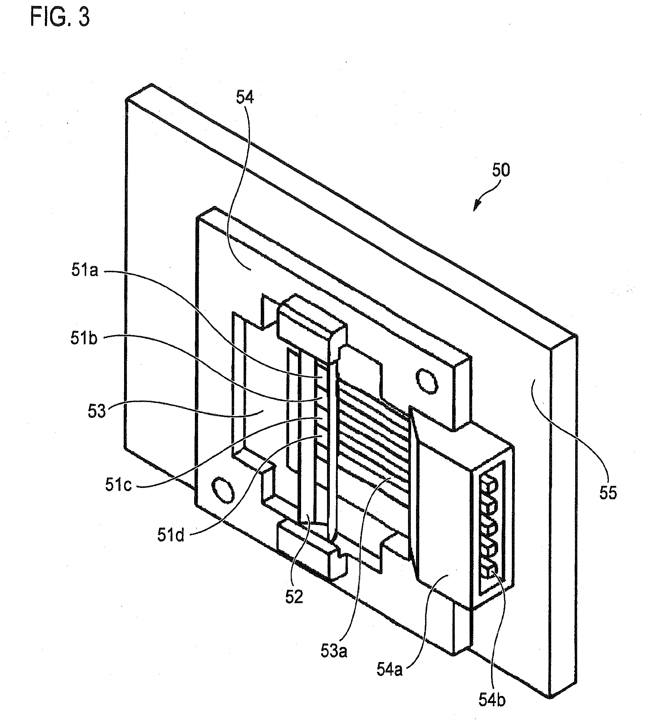

Fig. 3 illustrates an enlarged view of the light source unit 50. The light source unit 50 includes a light source 51 (see Fig. 2), a reflector 52, a substrate 53, an attachment 54, and a support base 55.

The light source 51 is disposed near a focal point of the projection lens 41. The light source 51 has light emitting elements 51a to 51d. The light emitting elements 51a to 51d are white light emitting diodes, and are provided on the substrate 53 side by side in upper and lower direction.

The substrate 53 is fixed on the support base 55, which is made of a material having high heat conductivity, such as metal, by the attachment 54. A connector portion 54a integrally formed with the attachment 54 has a group of terminals 54b. The terminals 54b are respectively electrically connected to the light emitting elements 51a to 51d via wirings 53a formed on the substrate 53. The connector portion 54a is communicably connected to the integrated controller 14 via a counterpart connector (not shown). The light emitting elements 51a to 51d are configured to independently emit light based on a command from the integrated controller 14.

The reflector 52 is provided in front of the light emitting elements 51a to 51d (it is noted that the reflector 52 is not illustrated in Fig. 2 so that the light source 51 is easily recognized). The light emitted from the light emitting elements 51a to 51d is reflected by the reflector 52, and then is guided to the projection lens 41. A light distribution angle, in the left and right directions, of illumination light obtained through the projection lens 41 is in a range of 1 degree to 3 degrees.

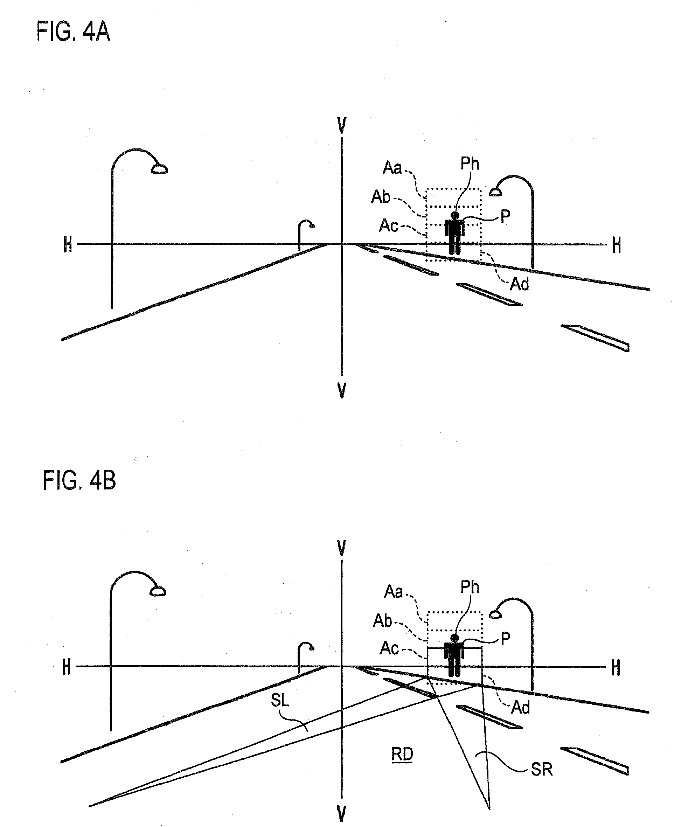

Fig. 4A illustrates a state in which a person P, such as a pedestrian, exists ahead of the vehicle 10. Frames Aa to Ad illustrated in Fig. 4A respectively indicate illumination regions which are formed ahead of the vehicle 10 by the light emitted from the light emitting elements 51a to 51d and passing through the projection lens 41.

The integrated controller 14 (an example of a detection section) detects a position of the person P in the right and left direction (a direction along a horizontal line H-H) and a position of a head Ph of the person P in the upper and lower direction (a direction along a vertical line V-V), based on the image captured by the camera 18.
Also, the integrated controller 14 (an example of a control section) controls the motor 61 (an example of a first driving mechanism) to move the light source unit 50 and the lens unit 40 in the right and left direction so that the illumination regions Aa to Ad include the detected person P.

In this instance, the integrated controller 14 determines a rotation amount of the motor 61, that is, a swiveling amount of the marking light unit 30 with reference to detection results of the wheel speed sensors 16 and the steering angle sensor 17. Thereby, the illumination regions can be moved in the right and left direction in accordance with a change in relative position between the vehicle 10 and the person P.

Furthermore, the integrated controller 14 determines as to whether each of the light emitting elements 51a to 51d is turned on. In this instance, the integrated controller 14 controls to turn off the light emitting element corresponding to the region including at least the head Ph of the detected person P. In other words, the integrated controller 14 turns off at least one of the light emitting elements 51a to 51d to thereby form a non-illumination region, including at least the head Ph of the person P, in the illumination regions Aa to Ad.

In the example illustrated in Fig. 4A, the head Ph of the detected person P is contained in the illumination region Ab. The integrated controller 14 sends to the light source unit 50 a command which turns off the light emitting elements 51a and 51b corresponding to the illumination regions Aa and Ab and turns on the light emitting elements 51c and 51d corresponding to the illumination region Ac and Ad.

As a result of the above-described control, the light distribution illustrated in Fig. 4B is achieved. The detected person P is illuminated in the spotlight fashion with illumination light SR emitted from the right marking light unit 30R and illumination light SL emitted from the left marking light unit 30L.

Since the head Ph of the person P is included in the non-illumination region at this time, it is possible to suppress the glare which is caused to the person P. That is, the spotlight illumination enables a driver to surely visually recognize the detected person P and to reliably let the person P recognize the existence of the vehicle 10 with suppressing the glare, which is caused to the person P.

In this example, the non-illumination region is formed by turning off at least one of the plurality of light emitting elements, which are arranged in the upper and lower direction. Therefore, the position of the non-illumination region can be changed in accordance with the position of the head Ph of the detected person P.

In this example, the illumination region Ad corresponding to the light emitting element 51d is formed to include at least a portion below the horizontal line H-H. Therefore, as illustrated in Fig. 4B, the illumination light SR and SL forms beams of light on a road surface RD. The person P can visually recognize the streaks of light extending from the vehicle 10 to himself or herself. As a result, this example can more reliably let the person P recognize the existence of the vehicle 10.

In this example, the lens unit 40 and the light source unit 50 are pivoted in the right and left direction to move the illumination regions Aa to Ad in the right and left direction. As compared to a configuration in which the whole lamp unit is swiveled in the right and left direction, the object to be controlled is light in weight. Therefore, it is possible to quickly follow the movement of the detected object, and also possible to miniaturize and simplify the driving mechanism.

In illuminating the person P with light, it is not necessary to emit the light from both the right marking light unit 30R and the left marking light unit 30L. If necessary, the person P may be illuminated by any one of the marking light units 30R and 30L.

The integrated controller 14 determines as to whether or not the detected object is the person P by the commonly known image-recognition technique. If the integrated controller 14 determines that the detected object is an animal or another object, all the light emitting elements 51a to 51d are turned on to illuminated the detected object in the spotlight fashion.

Next, a headlamp apparatus 12A according to a second example will be described. Similar reference numerals are assigned to elements that are identical, similar or equivalent to those in the first embodiment, and description thereon will be omitted.

As illustrated in Fig. 1, the arrangement of the headlamp apparatus 12A in the vehicle 10 and the role of the headlamp apparatus 12A in the headlamp control system 11 are similar to those of the headlamp apparatus 12 according to the first embodiment. In this example, the configuration of a light source unit 50A of a marking light unit 30A provided in the headlamp apparatus 12A is different from that of the light source unit 50 of the marking light unit 30 according to the first example.

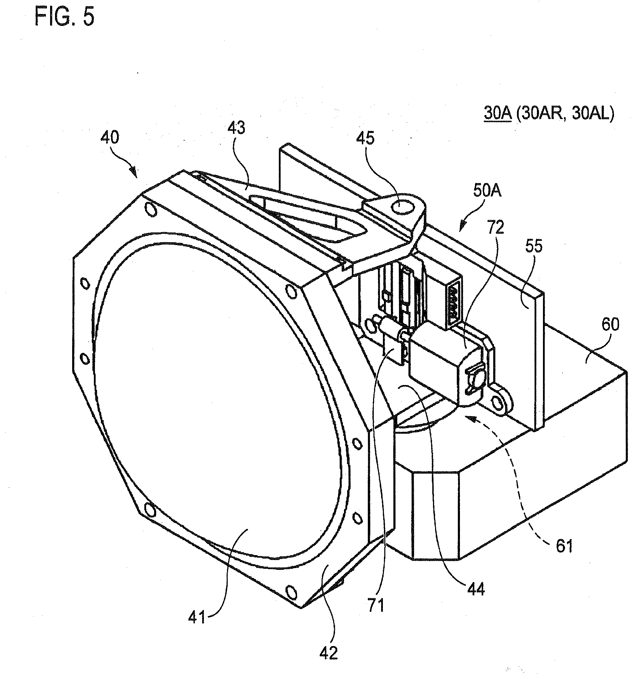

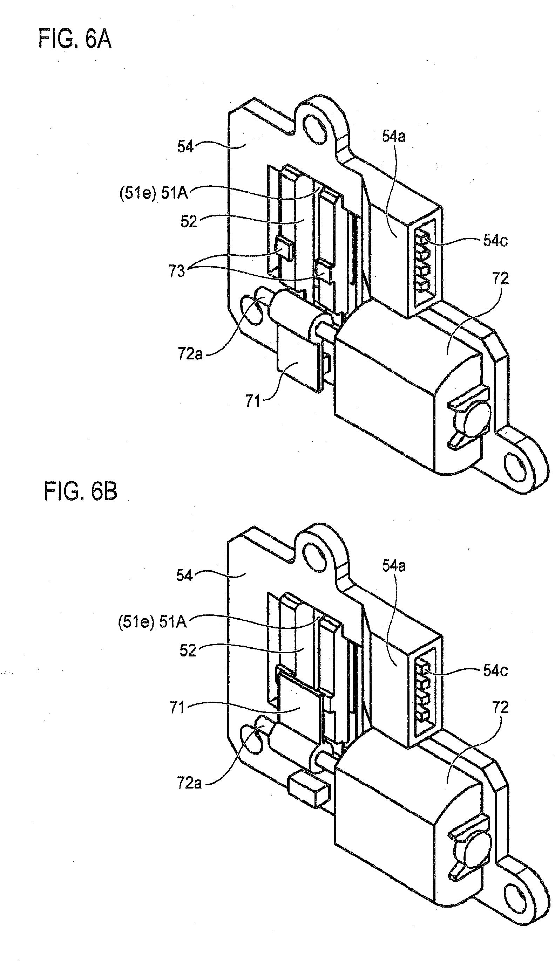

As illustrated in Figs. 5 and 6, the light source unit 50A of this example includes a motor 72 with a shade 71 being mounted on a rotation shaft 72a thereof. Also, the light source unit 50A of this example includes only one elongated light emitting element 51e extending in the upper and lower direction as a light source 51A. In this example, the light emitting element 51e is a white light emitting diode.

A group of terminals 54c provided in the connector portion 54a of the attachment 54 is electrically connected to the light emitting element 51e and the motor 72. The connector portion 54a is communicably connected to the integrated controller 14 via a counterpart connector (not shown). The light emitting element 51e is configured to emit the light based on a command from the integrated controller 14.

The motor 72 (an example of a second driving mechanism) rotates the rotation shaft 72a based on a command from the integrated controller 14 to pivot the shade 71 between an open position (first position) illustrated in Fig. 6A and a block position (second position) illustrated in Fig. 6B. At the block position, the shield 71 blocks a part of the light emitted from the light emitting element 51e. An abutment portion 73 against which the shade 71 located at the block position abuts is provided in front of the reflector 52 to protect the reflector 52 and the light emitting element 51e.

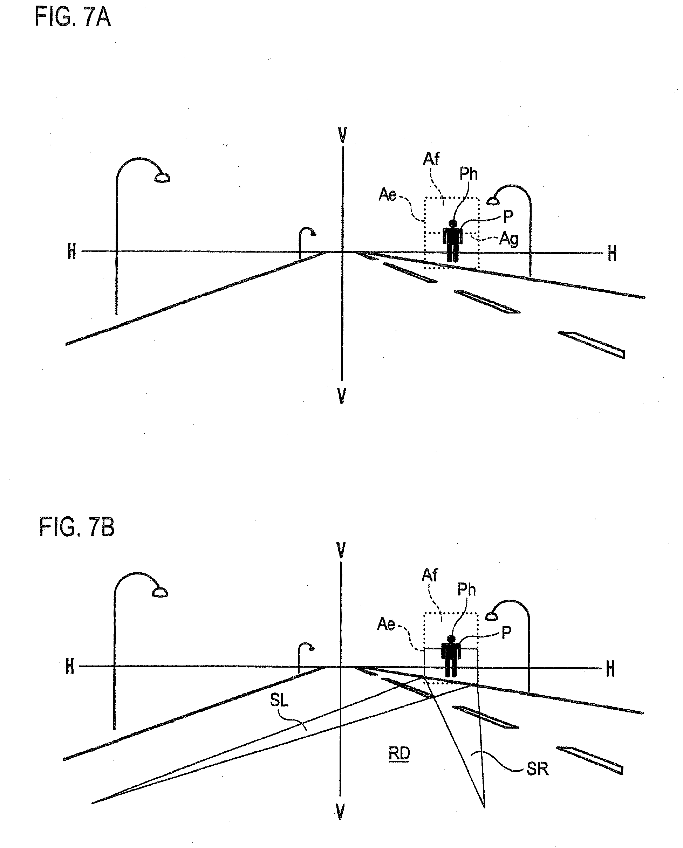

Figs. 7A illustrates a state in which a person P such as a pedestrian exists ahead of the vehicle 10. In the case where the shade 71 is at the open position, a frame Ae illustrated in Fig. 7A indicates an illumination region which is formed ahead of the vehicle 10 by the light which is emitted from the light emitting element 51e and passes through the projection lens 41.

An region Af in the illumination region Ae indicates a region which will be a non-illumination region when the shade 71 located at the block position blocks a part of the light emitted from the light emitting element 51e. A height of a lower end Ag of the non-illumination region Af is set so that at least the head Ph of the person P who is detected at a distance from the vehicle 10 being lower than a predetermined value is included in the non-illumination region Af. The predetermined value may be defined appropriately as a distance which is required to call attention to the driver of the vehicle 10.

The integrated controller 14 (an example of the detection section) detects a position of the person P in the right and left direction (a direction along the horizontal line H-H) based on the image captured by the camera 18. Also, the integrated controller 14 (an example of the control section) controls the motor 61 (an example of the first driving mechanism) to move the light source unit 50A and the lens unit 40 in the right and left direction so that the illumination region Ae includes the detected person P.

In this instance, the integrated controller 14 determines a rotation amount of the motor 61, that is, a swiveling amount of the marking light unit 30A, with reference to detections results of the wheel speed sensors 16 and the steering angle sensor 17. Thereby, the illumination region can be shifted in the right and left direction in accordance with a change in relative position between the vehicle 10 and the person P.

Also, the integrated controller 14 controls the motor 72 to move the shade 71 to the block position. As a result, the non-illumination region Af is formed in the illumination region Ae to include at least the head Ph of the person P.

As a result of the above-described control, the light distribution illustrated in Fig. 7B is achieved. The detected person P is illuminated in the spotlight fashion with the illumination light SL emitted from the right marking light unit 30AR and the illumination light SL emitted from the left marking light unit 30AL.

Since the head of the person P is included in the non-illumination region Af at this time, it is possible to suppress the glare which is cased to the person P. That is, the spotlight illumination enables the driver to surely visually recognize the detected person P and to surely let the person P recognize the existence of the vehicle 10 while suppressing the glare which is caused to the person P.

In this example, since only the single light emitting element 51e is used to control only whether or not the non-illumination region Af is formed by pivoting the shade 71, a process of determining the height of the head Ph of the person P or a control of turning on or off plural light emitting elements is not necessary. Accordingly, the circuit configuration of the light source unit 50A can be simplified, and a processing load on the integrated controller 14 can be reduced.

In this example, the illumination region Ae is formed to include at least a portion below the horizontal line H-H. Therefore, as illustrated in Fig. 7B, the illumination light SR and SL forms the streaks of light extending on the road surface RD. The person P can visually recognize the streaks of the light extending from the vehicle 10 to himself or herself, thereby further reliably let the person P recognize the existence of the vehicle 10.

The integrated controller 14 determines as to whether a detected object is the person P by use of the commonly known image-recognition technique. If the integrated controller 14 determines that the detected object is an animal or another object, the shade 71 is kept being at the open position. Thus, the detected object is illuminated in the spotlight fashion without the light emitted from the light emitting element 51e being blocked.

In illuminating the person P, it is not necessary to illuminate the person P with the light from both the right marking light unit 30AR and the left marking light unit 30AL. If necessary, the person P may be illuminated by any one of the marking light units 30AR and 30AL.

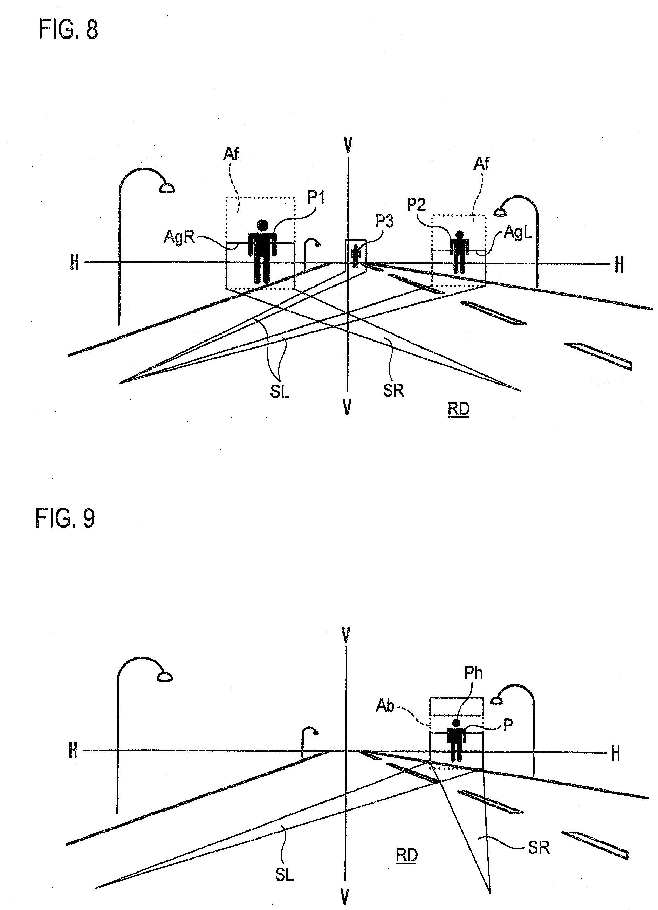

Next, a headlamp apparatus 12B according to an embodiment of the invention will be described with reference to Fig. 8. Similar reference numerals are assigned to elements identical, similar or equivalent to those in the second example, and description thereon will be omitted.

As illustrated in Fig. 1, the arrangement of the headlamp apparatus 12B in the vehicle 10 and the role of the headlamp apparatus 12B in the headlamp control system 11 are similar to those of the headlamp apparatus 12A according to the second example. This embodiment is different from the headlamp apparatus 12A in that a height of the lower end Ag of the non-illumination region Af formed by a right marking light unit 30BR of the headlamp apparatus 12B and that of the lower end Ag of the non-illumination region Af formed by a left marking light unit 30B of the headlamp apparatus 12B are different from each other.

The configuration in which the non-illumination region Af is formed by whether the shade 71 is at the open position or the block position cannot change the lower end Ag of the non-illumination region Af. Therefore, as the distance between the person P and the vehicle 10 becomes smaller, the position of the lower end Ag comes closer to the feet. In this instance, a ratio of the illumination region on the person P becomes small. As a result, visibility achieved by the spotlight illumination might be deteriorated.

In this embodiment, the positions of the respective shades 71 are adjusted so that the lower end Ag of the non-illumination region Af formed by the right marking light unit 30BR is higher than the lower end Ag of the non-illumination region Af formed by the left marking light unit 30BL.

Thereby, two types of heights are provided for the lower ends of the non-illumination regions Af which are formed to suppress the glare, and may be selectively used depending upon a situation. For example, in this embodiment, any one of the left and right marking light units 30B is used depending upon the distance between the vehicle 10 and the detected person P.

Fig. 8 illustrates the state in which plural persons P1 to P3 exist ahead of the vehicle 10. The person P2 is further from the vehicle 10 than the person P1. Also, the person P3 is further from the vehicle 10 than the person P2. The person P1 is illuminated with the illumination light SR with the light being blocked by the shade 71 of the right marking light unit 30BR. The person P2 is illuminated with the illumination light SL with the light being blocked by the shade 71 of the left marking light unit 30BL. The person P3 is illuminated with the illumination light SL without the light being blocked by the shade 71 of the left marking light unit 30BL.

The person P1 is illuminated by the right marking light unit 30R which is set so that the lower end AgR of the non-illumination region Af is at a higher position. Therefore, an area of the illumination region on the person P1 can be increased, thereby allowing the driver to have the good visibility. The person P2 is illuminated by the left marking light unit 30L which is set so that the lower end AgL of the non-illumination region Af is at a lower position. Therefore, the glare suppression effect can be achieved.

That is, the integrated controller 14 is configured to use the right marking light unit 30BR when a distance between the vehicle 10 and a detected person is equal to or less than a first predetermined value and to use the left marking light unit 30BL when the distance between the vehicle 10 and the detected person exceeds the first predetermined value.

The luminous intensity of the illumination light reaching the person being at a sufficiently distant position is decreased, and the glare caused to the person would be small. Therefore, the priority is put on the visibility, and the spotlight illumination is performed without the light being blocked by the shade 71. That is, when the distance between the vehicle 10 and the detected person exceeds a second predetermined value which is larger than the first predetermined value, the integrated controller 14 controls the motor 72 to move the shade 71 to the open position.

Since the light is not blocked by the shade 71, the person P3 being at the distant position may be illuminated by any one of the left and right marking light units 30B. Also, in order to make up for shortage in an amount of light, the person P3 may be illuminated by the both marking light units 30B.

The above embodiment is provided to facilitate understanding of the invention, but is not intended to limit the invention. The invention may be changed or modified without departing from the scope of the invention defined by the appended claims.

The light emitting element(s) serving as the light source are not limited to the light emitting diode(s), but may be a laser diode. Also, the color of the spotlight illumination light is not limited to white, and may be any color so long as it meets the related legislations.

The number of the light emitting elements is not limited to those described in the above examples or embodiment. In the first example, the number of the light emitting elements, which are arranged in the upper and lower direction, is at least two. The light emitting elements may be arranged to form plural rows in the right and left direction. Also, the elongated light emitting element in the second example may be arranged in plural in the right and left direction.

It is not necessary to turn off all the light emitting elements which emit light above the head Ph of the person P as described in the first example . As illustrated in Fig. 9, of the light emitting elements 51a and 51b which emit the light to and above the head Ph, only the light emitting element 51b, which emit the light to the region Ab including the head Ph, may be turned off. By minimizing the number of the light emitting elements to be turned off, the visibility of the driver can be enhanced to the maximum while the glare is suppressed.

In the first example, the glare is suppressed by forming the non-illumination region including at least the head Ph of the person P. If it is possible to suppress the glare, it is not necessary to turn off the light emitting element corresponding to the non-illumination region. Instead, such a control may be performed that the luminous intensity of the light emitting element corresponding to the non-illumination region is decreased.

In the second example and the embodiment of the invention, it is not necessary to form the non-illumination region Af by pivoting the shade 71. The non-illumination region Af may be formed by providing a mechanism in which the shade 71 is slid in the upper and lower direction.

In the embodiment of the invention, the different heights of the lower ends AgR and AgL of the non-illumination region Af does not always require to adjust the lower ends AgR and AgL using the positions of the shades 71. The heights of the lower ends AgR and AgL may be adjusted by making the shapes of the shades 71 different, by making the attached heights of the light source units 50A to the actuator units 60 different, or by making the attached heights of the marking light units 30B to the headlamp units 22 different.

For example, the first example may be configured to take any one of first and second light emitting states. In the first light emitting state, all the light emitting elements 51a to 51d are turned on to form the illumination region Ae. In the second light emitting state, at least one predetermined light emitting element is turned off to form the non-illumination region Af. The heights of the lower ends AgR and AgL of the non-illumination region Af may be made different from each other by making the right and left marking light units 30 different in position or number of the light emitting elements) being turned off.

In the embodiment, three or more marking light units 30B may be provided on the front end portion of the vehicle 10. Of the three or more marking light units 30B, at least one marking light unit is different from the others in height of the lower end of the non-illumination region.

In all the above examples or embodiment, when the spotlight illumination light is moved in the right and left direction, it is not necessary to integrally pivot the lens unit 40 and the light source units 50 (50A). Only the lens unit 40 may be pivoted in the right and left direction so long as a desired light distribution is achieved.

In all the above examples or embodiment, an object to be illuminated in the spotlight fashion is not limited to a pedestrian or the like. Both the left and right sides of a forward vehicle, such as a preceding vehicle and/or an oncoming vehicle, detected by using the camera 18 may be illuminated with the illumination light SL emitted from the left marking light 30L and the illumination light SR emitted from the right marking light 30R, respectively. In this instance, the non-illumination region is formed in a part of a high-beam light distribution pattern so that the detected forward vehicle is located in the non-illumination region.

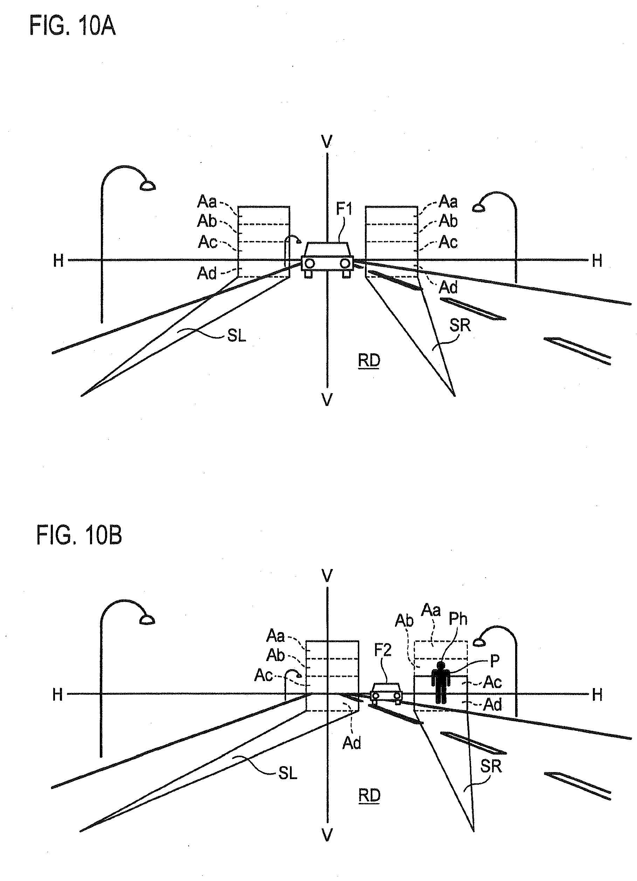

Fig. 10A is a view illustrating an operation example of the marking light units 30 according to the first example in the case where a preceding vehicle F1 is detected ahead of a self-lane.

The integrated controller 14 detects a position of the preceding vehicle F1 in the right and left direction (a direction along the horizontal line H-H) based on the image captured by the camera 18. Then, the integrated controller 14 controls the motor 61 to move the light source unit 50 and the lens unit 60 in the right and left direction so that the preceding vehicle F1 is located between the illumination region formed by the illumination light SR emitted from the right marking light 30R and the illumination region formed by the illumination light SL emitted from the left marking light 30L.

In this instance, the integrated controller 14 determines the rotation amount of the motor 61, that is, the swiveling amount of the marking light unit 30, with reference to the detection results of the wheel speed sensors 16 and the steering angle sensor 17. Thereby, the illumination regions can be moved in the right and left direction in accordance with a change in relative position between the vehicle 10 and the preceding vehicle F1.

At this time, the integrated controller 14 turns on all the light emitting elements 51a to 51d so that all the regions Aa to Ad constitute the illumination region. Thereby, it is possible to brightly illuminate the surroundings of the preceding vehicle F1 while preventing the glare from being caused to the preceding vehicle F1. Accordingly, in the case where high-beam lamps originally provided in the vehicle don't have a swivel mechanism or a function of partially forming the non-illumination region, the marking light units 30 can be used as an assistant or extended lamp unit for forming the high-beam light distribution

Fig. 10B is a view illustrating a case where an oncoming vehicle F2 is detected on the opposite lane and a pedestrian P is detected on a shoulder of a road. In this instance, the light distribution control which has been described with reference to Fig. 10A is performed for the oncoming vehicle F2, and the spotlight illumination which has been described with reference to Fig. 4B or Fig. 9 is performed for the pedestrian P, so that the glare is not caused to the oncoming vehicle F2 and the pedestrian P.

Similar light distribution control may be performed by the marking light unit 30A according to the second example or the marking light unit 30B according to the embodiment. In this instance, when a forward vehicle is detected and then the assistant high-beam light distribution is formed, the shade 71 is moved to the open position to make the whole region Ae be the illumination region. When a pedestrian or the like is detected, if necessary, the shade 71 is moved to the block position to form the non-illumination region Af in the region Ae.

## Claims

1. A headlamp control system comprising at least two lamp units (22R, 22L) to be respectively disposed in left and right front portions of a vehicle (10),
each lamp unit (22R, 22L) including
a light source (51, 51A) having at least one light emitting element (51a to 51d, 51e), and
a lens (41) configured to form an illumination region (Ae) ahead of the vehicle (10) by allowing light emitted from the light source (51) to pass therethrough;
a first driving mechanism configured to move the illumination region in a right and left direction;
a camera (18) configured to capture ahead of the vehicle (10) and;
a detection section configured to detect a person (P) existing ahead of the vehicle (10) based on an image captured by the camera; **characterized by**
a control section (14) configured
to control the first driving mechanism so that the illumination region includes the person (P) detected by the detection section, and
to form a non-illumination region (Af) in the illumination region (Ae) so that at least a head of the person (P) is included in the non-illumination region (Af), wherein the non-illumination region (Af) has a lower end (Ag) set at a predetermined height for a certain distance from the vehicle, and wherein
the lamp unit (22R, 22L) to be disposed in the left front portions of the vehicle (10) and the lamp unit (22R, 22L) to be disposed in the right front portion of the vehicle (10) are configured such that the heights of the lower ends (Ag) of the respective non-illumination regions (Af) are different from each other.

2. The headlamp control system according to claim 1, wherein
the light source (51) includes a plurality of light emitting elements (51a to 51d) arranged in an upper and lower direction, and
the control section (14) turns off at least one of the plurality of light emitting elements (51a to 51d) to form the non-illumination region (Af).

3. The headlamp control system according to any one of claims 1 to 2, wherein each lamp unit (22R, 22L) further includes
a shade (71) configured to block a part of the light emitted from the light source (51), and
a second driving mechanism (72) configured to move the shade (71) in the upper and lower direction, and
the control section (14) controls the second driving mechanism (72) to form the non-illumination region (Af) by the shade (71).

4. The headlamp control system according to any one of claims 1 to 3, wherein the illumination region (Ae) is formed to include at least a portion below a horizontal line.

5. The headlamp control system according to any one of claims 1 to 4, wherein the first driving mechanism pivots the lens in the right and left direction to move the illumination region (Ae) in the right and left direction.

6. The headlamp control system according to one of the preceding claims, wherein the control section (14) forms the non-illumination region (Af) using any one of the lamp units (22R, 22L) disposed in the left and right front portions of the vehicle (10) in accordance with a distance between the vehicle (10) and the person (P) detected by the detection section.

## Patentansprüche

1. Scheinwerfersteuersystem, umfassend mindestens zwei Lampeneinheiten (22R, 22L), die jeweils in einem linken und rechten Vorderabschnitt eines Fahrzeugs (10) anzuordnen sind, wobei jede Lampeneinheit (22R, 22L) eine Lichtquelle (51, 51A) beinhaltet, die mindestens ein Licht emittierendeds Element (51a bis 51d, 51e) und eine Linse (41) aufweist, die gestaltet ist, eine Beleuchtungsregion (Ae) vor dem Fahrzeug (10) zu bilden, indem Licht, das von der Lichtquelle (51) ausgestrahlt wird, hindurchgelassen wird;
einen ersten Antriebsmechanismus, der gestaltet ist, die Beleuchtungsregion in einer Richtung nach rechts und nach links zu bewegen;
eine Kamera (18), die gestaltet ist, Aufnahmen vor dem Fahrzeug (10) zu machen, und;
eine Erfassungssektion, die gestaltet ist, eine Person (P), die sich vor dem Fahrzeug (10) befindet, basierend auf einem Bild zu erfassen, das von der Kamera aufgenommen wurde; **gekennzeichnet durch**
eine Steuersektion (14), die gestaltet ist,
den ersten Antriebsmechanismus so zu steuern, dass die Beleuchtungsregion die Person (P) beinhaltet, die durch die Erfassungssektion erfasst wurde, und um eine Nicht-Beleuchtungsregion (Af) in der Beleuchtungsregion (Ae) zu bilden, sodass mindestens ein Kopf der Person (P) in der Nicht-Beleuchtungsregion (Af) beinhaltet ist, wobei die Nicht-Beleuchtungsregion (Af) ein unteres Ende (Ag) aufweist, das bei einer vorbestimmten Höhe für einen gewissen Abstand vom Fahrzeug eingestellt ist, und wobei
die Lampeneinheit (22R, 22L), die in den linken Vorderabschnitten des Fahrzeugs (10) anzuordnen ist, und die Lampeneinheit (22R, 22L), die in dem rechten Vorderabschnitt des Fahrzeugs (10) anzuordnen, so gestaltet sind, dass sich die Höhen der unteren Enden (Ag) der jeweiligen Nicht-Beleuchtungsregionen (Af) voneinander unterscheiden.

2. Scheinwerfersteuersystem nach Anspruch 1, wobei
die Lichtquelle (51) eine Vielzahl von Licht emittierenden Elementen (51a bis 51d) beinhaltet, die in einer Richtung nach oben und nach unten angeordnet sind, und
die Steuersektion (14) mindestens eines der Vielzahl von Licht emittierenden Elementen (51a bis 51d) ausschaltet, um die Nicht-Beleuchtungsregion (Af) zu bilden.

3. Scheinwerfersteuersystem nach einem der Ansprüche 1 bis 2, wobei jede Lampeneinheit (22R, 22L) weiter Folgendes beinhaltet
einen Schirm (71), der gestaltet ist, einen Teil des Lichts, das aus der Lichtquelle (51) emittiert wird, zu blockieren, und
einen zweiten Antriebsmechanismus (72), der gestaltet ist, den Schirm (71) in der Richtung nach oben und nach unten zu bewegen, und
die Steuersektion (14) den zweiten Antriebsmechanismus (72) steuert, um die Nicht-Beleuchtungsregion (Af) durch den Schirm (71) zu bilden.

4. Scheinwerfersteuersystem nach einem der Ansprüche 1 bis 3, wobei die Beleuchtungsregion (Ae) gebildet ist, mindestens einen Abschnitt unter einer horizontalen Linie zu beinhalten.

5. Scheinwerfersteuersystem nach einem der Ansprüche 1 bis 4, wobei der erste Antriebsmechanismus die Linse in die Richtung nach rechts und nach links schwenkt, um die Beleuchtungsregion (Ae) in die Richtung nach rechts und nach links zu bewegen.

6. Scheinwerfersteuersystem nach einem der vorstehenden Ansprüche, wobei die Steuersektion (14) die Nicht-Beleuchtungsregion (Af) unter Verwendung einer der Lampeneinheiten (22R, 22L), die in dem linken und rechten Vorderabschnitt des Fahrzeugs (10) angeordnet sind, gemäß einem Abstand zwischen dem Fahrzeug (10) und der Person (P), die von der Erfassungssektion erfasst wird, bildet.

## Revendications

1. Système de commande de phare comprenant au moins deux unités de lampe (22R, 22L) à disposer respectivement dans des portions avant gauche et droite d'un véhicule (10), chaque unité de lampe (22R, 22L) incluant une source de lumière (51, 51A) présentant au moins un élément électroluminescent (51a à 51d, 51e), et
une lentille (41) configurée pour former une région d'illumination (Ae) devant le véhicule (10) en permettant à de la lumière émise depuis la source de lumière (51) de passer à travers celle-ci ;
un premier mécanisme d'entraînement configuré pour déplacer la région d'illumination dans une direction droite et gauche ;
une caméra (18) configurée pour capturer devant le véhicule (10) et ;
une section de détection configurée pour détecter une personne (P) existant devant le véhicule (10) sur la base d'une image capturée par la caméra ; **caractérisé par**
une section de commande (14) configurée
pour commander le premier mécanisme d'entraînement de sorte que la région d'illumination inclue la personne (P) détectée par la section de détection, et
pour former une région de non-illumination (Af) dans la région d'illumination (Ae) de sorte qu'au moins une tête de la personne (P) soit incluse dans la région de non-illumination (Af), dans lequel la région de non-illumination (Af) présente une extrémité inférieure (Ag) définie à une hauteur prédéterminée à une certaine distance du véhicule, et
dans lequel l'unité de lampe (22R, 22L) à disposer dans les portions avant gauches du véhicule (10) et l'unité de lampe (22R, 22L) à disposer dans la portion avant droite du véhicule (10) sont configurées de sorte que les hauteurs des extrémités inférieures (Ag) des régions de non-illumination respectives (Af) soient différentes les unes des autres.

2. Système de commande de phare selon la revendication 1, dans lequel
la source de lumière (51) inclut une pluralité d'éléments électroluminescents (51a à 51d) agencés dans une direction supérieure et inférieure, et
la section de commande (14) éteint au moins un de la pluralité d'éléments électroluminescents (51a à 51d) pour former la région de non-illumination (Af).

3. Système de commande de phare selon l'une quelconque des revendications 1 à 2, dans lequel chaque unité de lampe (22R, 22L) inclut en outre
une ombre (71) configurée pour bloquer une partie de la lumière émise depuis la source de lumière (51), et
un second mécanisme d'entraînement (72) configuré pour déplacer l'ombre (71) dans la direction supérieure et inférieure, et
la section de commande (14) commande le second mécanisme d'entraînement (72) pour former la région de non-illumination (Af) par l'ombre (71).

4. Système de commande de phare selon l'une quelconque des revendications 1 à 3, dans lequel la région d'illumination (Ae) est formée pour inclure au moins une portion en dessous d'une ligne horizontale.

5. Système de commande de phare selon l'une quelconque des revendications 1 à 4, dans lequel le premier mécanisme d'entraînement pivote la lentille dans la direction droite et gauche pour déplacer la région d'illumination (Ae) dans la direction droite et gauche.

6. Système de commande de phare selon l'une des revendications précédentes, dans lequel la section de commande (14) forme la région de non-illumination (Af) en utilisant l'une quelconque des unités de lampe (22R, 22L) disposées dans les portions avant gauche et droite du véhicule (10) en fonction d'une distance entre le véhicule (10) et la personne (P) détectée par la section de détection.
